(19) Europäisches Patentamt
European Patent Office
Office européen des brevets

(11) **EP 3 516 776 B1**

(12) **EUROPEAN PATENT SPECIFICATION**

(45) Date of publication and mention
of the grant of the patent:
**16.02.2022 Bulletin 2022/07**

(21) Application number: **16779018.7**

(22) Date of filing: **23.09.2016**

(51) International Patent Classification (IPC):
***H04B 1/00*** *(2006.01)*

(52) Cooperative Patent Classification (CPC):
**H04B 1/0017**

(86) International application number:
**PCT/EP2016/072750**

(87) International publication number:
**WO 2018/054494 (29.03.2018 Gazette 2018/13)**

(54) **DIGITAL FRONT END FOR USE WITH DIRECT DIGITAL RADIO FREQUENCY MODULATOR**

DIGITALES FRONT-END ZUR VERWENDUNG MIT DIREKTEM DIGITALEM
FUNKFREQUENZMODULATOR

FRONTAL NUMÉRIQUE DESTINÉ À ÊTRE UTILISÉ AVEC UN MODULATEUR DE
RADIOFRÉQUENCE NUMÉRIQUE DIRECTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.07.2019 Bulletin 2019/31**

(73) Proprietor: **Huawei Technologies Co., Ltd.
Longgang District
Shenzhen, Guangdong 518129 (CN)**

(72) Inventors:
• **KARTHAUS, Udo**
  **80992 Munich (DE)**
• **VANDENAMEELE, Patrick**
  **80992 Munich (DE)**

(74) Representative: **Gill Jennings & Every LLP
The Broadgate Tower
20 Primrose Street
London EC2A 2ES (GB)**

(56) References cited:
**US-A1- 2010 056 201**

• **VANKKA J ET AL: "A GSM/EDGE/WCDMA
MODULATOR WITH ON-CHIP D/A CONVERTER
FOR BASE STATIONS", IEEE TRANSACTIONS
ON CIRCUITS AND SYSTEMS II: ANALOG AND
DIGITALSIGNAL PROCESSING, INSTITUTE OF
ELECTRICAL AND ELECTRONICS ENGINEERS
INC, 345 EAST 47 STREET, NEW YORK, N.Y.
10017, USA, vol. 49, no. 10, 10 October 2002
(2002-10-10), pages 645-655, XP002302581, ISSN:
1057-7130, DOI: 10.1109/TCSII.2002.807268**
• **MAHARATNA K ET AL: "Virtually scaling-free
adaptive CORDIC rotator", IEE PROCEEDINGS E.
COMPUTERS & DIGITAL TECHNIQUES,
INSTITUTION OF ELECTRICAL ENGINEERS.
STEVENAGE, GB, vol. 151, no. 6, 18 November
2004 (2004-11-18), pages 448-456, XP006022913,
ISSN: 0143-7062, DOI: 10.1049/IP-CDT:20041107**

## Description

TECHNICAL FIELD

The present disclosure relates to a Digital Front End (DFE) for use with Direct Digital Radio Frequency Modulator (DDRM), a DDRM and a method for converting a 4-phase digital baseband signal received by a DFE of a DDRM to an 8-phase digital output signal.

BACKGROUND

Digital transmitters, also called digital direct RF modulators (DDRMs), are a new trend in mobile communication. Due to their huge sampling rates, they inherently support large signal bandwidth, as is required for modern 3G, 4G (LTE, including carrier aggregation) and 5G standards. Currently employed DDRMs today are 4-phase DDRMs, meaning that the output data rate is approximately (or exactly) 4 times the RF frequency.

Limitations and challenges of 4-phase DDRMs include: Linearity, mainly seen as counter-intermodulation products of 3rd and 5th order (C-IM3, C-IM5); and harmonic distortion of 2nd and 3rd order (HD2, HD3).

A Direct-Digital RF Modulator is a wireless transmitter circuit that directly modulates a digital baseband signal onto an RF carrier frequency. This is done by multiplying the baseband signal with a signal that contains a strong frequency component at the desired RF frequency (also referred to as the Local Oscillator).

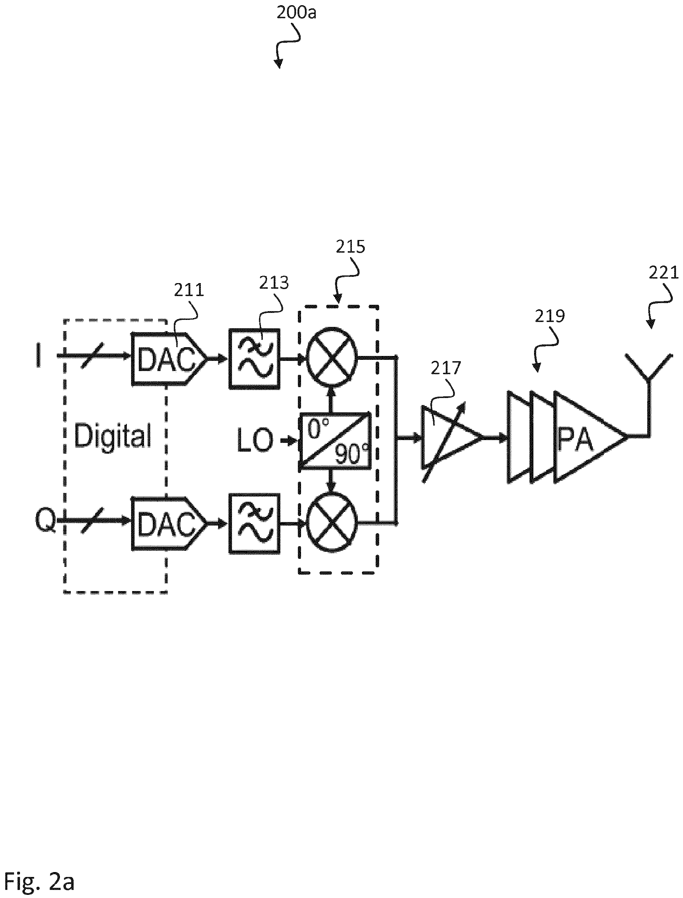

Figure 2a illustrates the conventional quadrature up-converter chain 200a. In most modern transmitters the starting point is baseband data (I,Q) in a digital representation. This digital baseband data is converted into an analog equivalent signal by a baseband Digital-to-Analog converter (DAC) 211. It is followed by a reconstruction filter 213 that is then used to remove the artifacts due to the digital nature of the source signal such as aliases and quantization noise. Furthermore, the filter removes all effects of non-idealities from the D/A converter itself, e.g. mismatch noise, thermal noise and out-of-band distortion components that fall outside of the filter bandwidth. The filtered signal is then applied to the quadrature mixer 215 that performs a multiplication with the Local Oscillator (LO). The resulting RF signal is then amplified with an amplification stage 217, 219 that consists of one or more amplifiers, eventually delivering the power to the antenna 221.

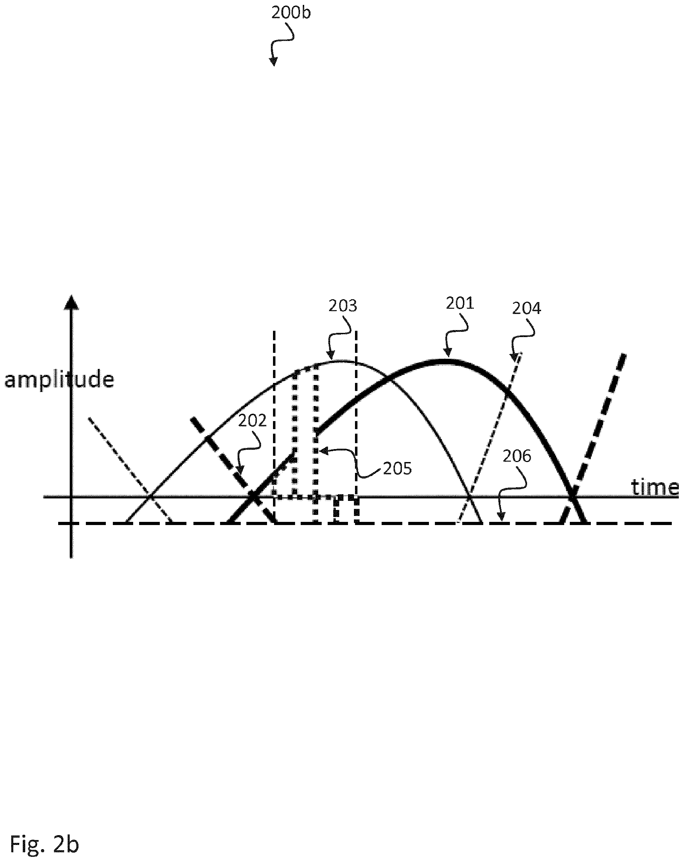

A conceptual representation of the up-conversion and amplification stage 200 is shown in figure 2b. The analog baseband signal is shown by the graph 201 (in-phase) and the graph 203 (quadrature). The solid line represents the positive signal in a differential signal pair, while the dashed lines are the opposite sign. One way to implement an up-conversion operation of such a baseband signal with a given LO having frequency FLO is to split the LO period into 4 equal parts, each with a length of T4LO = 0.25/FLO. It can be shown that alternating between the positive in-phase 201, positive quadrature 202, negative in-phase 203 and negative quadrature 204 signals in one LO period will implement an up-conversion of the complex baseband signal to the LO frequency. The RF output 205 of such a mixer can then be fed into an amplifier that is biased 206 e.g. in Class-AB operation.

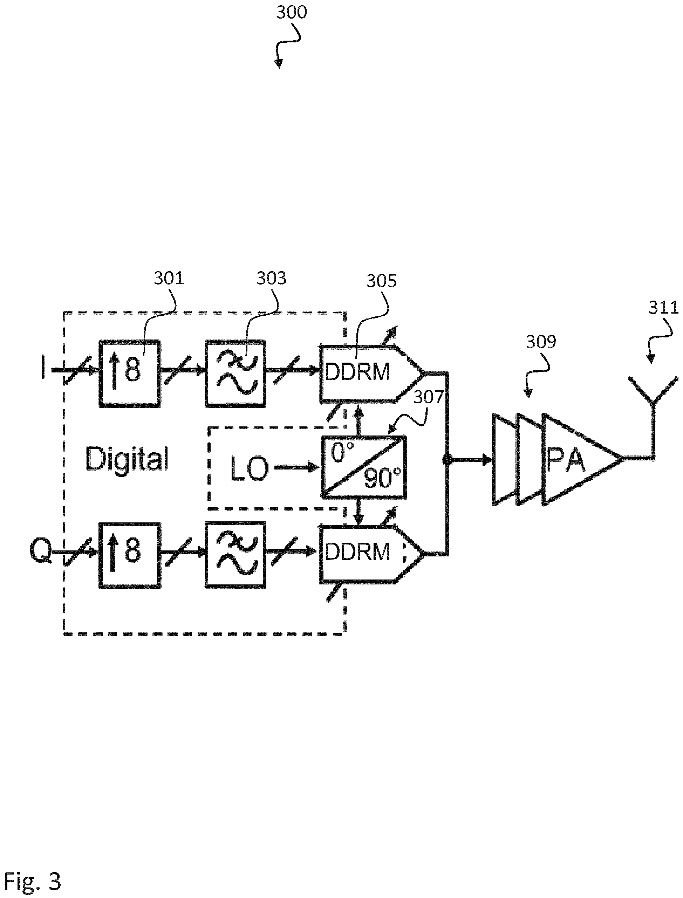

Fig. 3 shows a block diagram illustrating a DDRM based transmitter 300. The DDRM differs from a traditional quadrature up-conversion chain by the fact that the digital signal is first mixed 307 to LO and then recombined into an RF signal. First the digital baseband signal (I, Q) is digitally up-sampled 301 and digitally filtered 303 to ensure proper quantization noise performance and sufficient alias distance. Afterwards it is applied directly to the DDRM 305 that combines the functions of the DAC, mixer and first amplification stage. The DDRM 305 basically is a combination of several weighted slices consisting of a mixer and a power generation block. Based upon the magnitude of the baseband data a number of these slices are enabled in such a way that the signal presented to the antenna 311 corresponds to the desired signal.

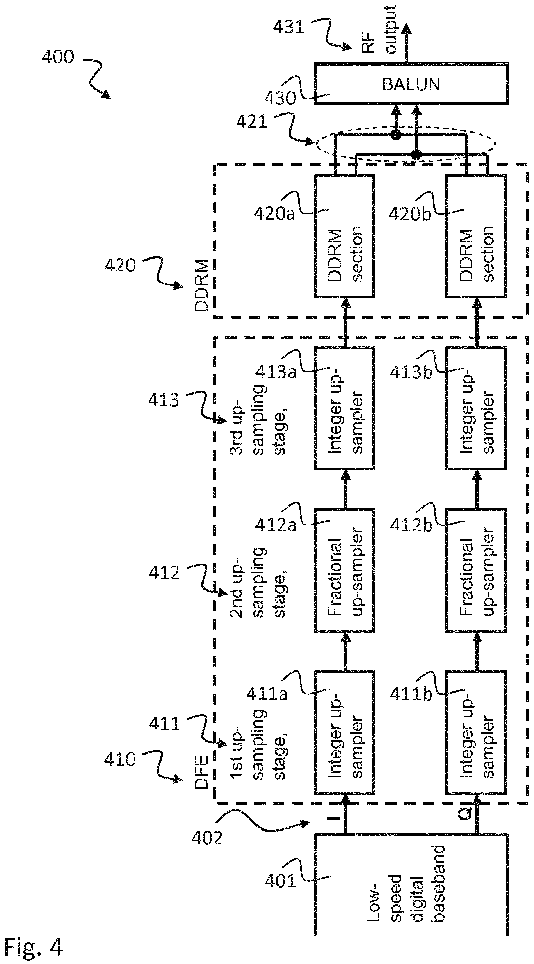

Figure 4 shows a block diagram of a DDRM system 400 including a digital front end (DFE) section 410, a DDRM section 420 and an output balun 430. A low speed digital baseband signal 401 with differential in-phase (I) and quadrature (Q) components 402 is provided to the DFE section 410 where the baseband signal 401 is processed and an output signal is provided to the DDRM section 420. The DDRMs 420a, 420b basically are a combination of several weighted slices consisting of a mixer and a power generation block as described above with respect to Fig. 3. Finally output signals of both DDRMs 420a, 420b are combined by a combining unit 421 and provided to the output balun 430 to generate the RF output signal 431.

The differential in-phase (I) and quadrature (Q) components 402 provide a 4-phase signal. The I component represents the wanted RF signal at phase 0° and 180°; the Q component at 90° and 270°. Due to this architecture, the DDRM system 400 is also called as 4-phase DDRM system. Note that the differential I and Q signal components do not have to be fully differential in the sense that their sum does not have to be constant. The only constraint is that they should have 180 degrees of an RF cycle phase difference (=TLO/2). They can have duty cycles that differ from 50%.

The DFE section 410 includes a first up-sampling stage 411, a second up-sampling stage 412 and a third up-sampling stage 413.

The first (optional) up-sampler 411a for in-phase component, 411b for quadrature component), is increasing the data rate from the typically low data rate provided by the baseband processing unit 401, to some higher data rate. This up-sampler 411a, 411b typically has an integer up-sampling ratio. It can be called an "integer up-sampler" or "integer interpolator" or "integer up-sampling filter". As this filter 411a, 411b is running at moderate clock speed, it can be more complex while still consuming a reasonably low amount of supply power. It is often implemented as a half-band FIR filter. This filter can have a high filter order, to provide good alias (baseband) filtering.

The second (optional) up-sampler 412a for in-phase component, 412b for quadrature component), is increasing the data rate further. This second up-sampler 412a, 412b typically has a non-integer up-sampling ratio, and is sometimes called "fractional up-sampler" or "fractional interpolator". As fractional up-sampling, e.g. realized by LaGrange interpolators, has the highest complexity, it typically involves several full multipliers running at the relatively high output data rate of the interpolator. Therefore, this filter 412a, 412b is typically the one with the highest power consumption.

The third (optional) up-sampler 413a for in-phase component, 413b for quadrature component), is running at the highest data rate, typically ¼, ½, 1 or 2 times the RF frequency. At this very high frequency, complexity needs to be low to keep supply power reasonably low. A typical architecture is the CIC (Cascaded-Integrator-Comb-filter) architecture, requiring nothing but a few differentiators and integrators.

The balun 430 is used to convert between balanced (two signals working against each other where ground is irrelevant) and unbalanced (a single signal working against ground or pseudo-ground) signal representation. The differential signal representation at the output of the DDRM 420 is converted to a non-differential RF output signal 431.

Further background information is provided in the following documents:

VANKKA J ET AL: "A GSM/EDGE/WCDMA MODULATOR WITH ON-CHIP D/A CONVERTER FOR BASE STATIONS", IEEE TRANSACTIONS ON CIRCUITS AND
SYSTEMS II: ANALOG AND DIGITALSIGNAL PROCESSING, INSTITUTE OF ELECTRICAL AND ELECTRONICS ENGINEERS INC, 345 EAST 47 STREET, NEW YORK, N.Y. 10017, USA,

vol. 49, no. 10, 10 October 2002 (2002-10-10), pages 645-655,
XP002302581,
ISSN: 1057-7130, DOI: 10.1109/TCSII.2002.807268

MAHARATNA KETAL: "Virtually scaling-free adaptive CORDIC rotator", IEE PROCEEDINGS E. COMPUTERS & DIGITAL TECHNIQUES, INSTITUTION OF ELECTRICAL ENGINEERS. STEVENAGE, GB,

vol. 151, no. 6, 18 November 2004 (2004-11-18), pages 448-456,
XP006022913,
ISSN: 0143-7062, DOI: 10.1049/IP-CDT:20041107

US 2010/056201 A1 (AKAMINE YUKINORI [JP] ET AL) 4 March 2010 (2010-03-04)

SUMMARY

It is the object of the invention to provide a design technique for a Direct-Digital RF Modulator (DDRM) with improved linearity and/or reduced harmonic distortion.

This object is achieved by the features of the independent claims. Further implementation forms are apparent from the dependent claims, the description and the figures.

A basic idea of the invention is to overcome the limitations described above by increasing the number of phases, i.e. the ratio of the output data rate to RF transmit frequency, from 4 to e.g. 6, 8 or more. In the following, different designs for DDRM systems are presented that solve the main drawback of multi-phase DDRMs which is the need for very high speed digital circuits, which - due to the high clock speed, which often is on the order of the RF frequency - consume significant supply power. In the disclosed designs for DDRM systems presented hereinafter, digital supply power consumption scales sub-linear with the number of phases, thereby significantly reducing the power consumption.

In a preferred design for a DDRM system, a better solution for the above described problem is to move the 4-phase to 8-phase conversion to a later stage, resulting in a higher data rate inside the digital frontend. This way, the number of instances of the block with the highest current consumption, the fractional up-sampler, does not need to be increased. A preferred design as described below also solves the issue of unwanted transmission of an image signal, which would normally occur when moving the 4-phase to 8-phase conversion to a later stage.

The following advantages can be achieved over 4-phase DDRMs: Suppressed harmonics / harmonic distortion (HD2, HD3); improved linearity, that is suppressed inter-modulation products (C-IM3, C-IM5); and a more constant supply current, at baseband as well as at harmonics of the RF. This results in less voltage ripple on supplies and hence a cleaner output signal. It further results in less need for supply decoupling and hence a smaller die size; resulting in fewer GND bonds needed.

By moving the 4-phase to 8-phase conversion to a later stage according to the preferred design, a lower power consumption of the digital front end (DFE) can be achieved.

The preferred design provides a multi-phase DDRM with reduced digital power consumption and with little (or no) image signal transmission.

The above described problem is solved by each of the following three aspects as further described below: An 8-phase DDRM; doing the 4-phase (I-Q) to 8-phase (A-B-C-D) conversion after the fractional up-sampling; and image cancellation/elimination methods as described below.

In order to describe the invention in detail, the following terms, abbreviations and notations will be used:

RF:      Radio Frequency
DDRM:    Direct-Digital RF Modulator
DFE:     Digital Front End
FIR:     Finite Impulse Response
IIR:     Infinite Impulse Response
I:       In-phase component of 4-phase signal
Q:       Quadrature component of 4-phase signal
A:       first signal component of 8-phase signal
B:       second signal component of 8-phase signal
C:       third signal component of 8-phase signal
D:       fourth signal component of 8-phase signal

One example, useful to understand but not being part of the invention, relates to a digital front end (DFE) for a direct digital radio frequency modulator (DDRM). The DFE comprising: an up-sampling unit, configured to provide an up-sampled 4-phase digital baseband (DBB) signal comprising in-phase (I) and quadrature (Q) information; and a conversion unit, configured to convert the up-sampled 4-phase DBB signal to an 8-phase DBB signal.

Such a device provides a design technique for a Direct-Digital RF Modulator (DDRM) with improved linearity and reduced harmonic distortion. Due to the conversion unit converting the 4-phase first digital signal to an 8-phase second digital signal counter-intermodulation products of $3^{rd}$ and $5^{th}$ order and higher can be reduced thereby improving linearity. Harmonic distortion of $2^{nd}$ and $3^{rd}$ order and higher can be reduced thereby improving linearity. By moving the 4-phase to 8-phase conversion to a later stage a higher data rate inside the digital frontend can be reached. This way, the number of instances of the block with the highest current consumption, the fractional up-sampler, does not need to be increased. By such design the issue of unwanted transmission of an image signal, which would normally occur when moving the 4-phase to 8-phase conversion to a later stage can be solved.

In a first possible implementation form of the digital front end according to the first aspect, the conversion unit comprises a digital combination logic configured to provide the 8-phase DBB signal based on combinations of the in-phase (I) and quadrature (Q) information.

Such digital combination logic can be easily implemented based on a few signal combination elements.

In a second possible implementation form of the digital front end according to the first implementation form of the first aspect, the digital combination logic is configured to provide the combinations of the in-phase (I) and quadrature (Q) information based on addition, subtraction and multiplication of respective ones of the in-phase (I) and quadrature (Q) information.

Such digital combination logic can be implemented in a computational efficient manner and requires only 2 multiplication operations and 2 addition operations.

In a third possible implementation form of the digital front end according to any of the first or second implementation forms of the first aspect, the digital combination logic is configured to generate the following combinations: $A = I$; $B = \sqrt{0.5}(I + Q)$ ; $C = Q$; $D = \sqrt{0.5}(I - Q)$ or any linear scaling of these combinations, where I and Q are the in-phase and quadrature information of the up-sampled 4-phase DBB signal and A, B, C, D are in-phase and quadrature information of the 8-phase DBB signal.

These equations can be easily implemented by some simple hardware block.

In a fourth possible implementation form of the digital front end according to any of the first or second implementation forms of the first aspect, the digital combination logic is configured to generate the following combinations: $A = I - (\sqrt{2} - 1)Q$ ; $B = I + (\sqrt{2} - 1)Q$ ; $C = Q + (\sqrt{2} - 1)I$ ; $D = Q - (\sqrt{2} - 1)I$ or any linear scaling of these combinations, where I and Q are the in-phase and quadrature information of the up-sampled 4-phase DBB signal and A, B, C, D are in-phase and quadrature information of the 8-phase DBB signal.

These equations can be easily implemented by some simple hardware block.

The up-sampling unit comprises at least one of an integer up-sampler having an integer up-sampling ratio and a fractional up-sampler having a non-integer up-sampling ratio.

This provides the advantage of a flexible design of the DFE. Depending on the requirements one or more integer up-samplers can be used with or without a fractional up-sampler.

The conversion unit is configured to suppress an undesired image signal caused by a phase error of the DFE, in particular due to the phase conversion of the conversion unit.

This provides the advantage that by using a multi-phase signal that is generated by converting the 4-phase signal to an 8-phase signal, image signals can be efficiently suppressed. By moving the 4-phase to 8-phase conversion to a later stage a higher data rate inside the digital frontend can be achieved. This way, the number of instances of the block with the highest current consumption, the fractional up-sampler, does not need to be increased. By such design the issue of unwanted transmission of an image signal, which would normally occur when moving the 4-phase to 8-phase conversion to a later stage can be solved.

The conversion unit comprises a delay element configured to delay the quadrature information (Q) of the up-sampled 4-phase DBB signal; and the conversion unit is configured to provide delayed versions (A",B") of in-phase and quadrature information of the 8-phase DBB signal based on the delayed quadrature information (Q) of the 4-phase DBB signal.

This provides the advantage that the delay element can be used to process the old data together with the new data, thereby being able to completely suppress the image.

The conversion unit comprises a multiplexer configured to multiplex between switching the in-phase and quadrature information (A', B') of the 8-phase DBB signal and their delayed versions (A", B") to the in-phase and quadrature information (A, B) of the 8-phase DBB signal.

This provides the advantage that the image does not occur, when multiplexers and a delay element are added to the system.

In a fifth possible implementation form of the digital front end according to the first aspect as such or according to any of the first to the fifth implementation forms of the first aspect, the DFE comprises at least one second up-sampling unit, in particular having an integer up-sampling ratio, configured to up-sample the 8-phase DBB signal to generate an up-sampled 8-phase DBB signal.

This provides the advantage that the accuracy of the system can be further improved when one or more such second up-sampling units are added.

In a sixth possible implementation form of the digital front end according to the first aspect as such or according to any of the preceding implementation forms of the first aspect, the DFE comprises an image cancellation unit configured to cancel an undesired image signal caused by a phase error of the DFE, in particular due to phase conversion of the conversion unit.

This provides the advantage that by using such image cancellation unit the undesired image signal can be efficiently cancelled. By moving the 4-phase to 8-phase conversion to a later stage a higher data rate inside the digital frontend can be achieved. This way, the number of instances of the block with the highest current consumption, the fractional up-sampler, does not need to be increased. By such design the issue of unwanted transmission of an image signal, which would normally occur when moving the 4-phase to 8-phase conversion to a later stage can be solved.

In a seventh possible implementation form of the digital front end according to the tenth implementation form of the first aspect, the image cancellation unit comprises two digital FIR filters with different phase frequency responses.

This provides the advantage that by two such digital FIR filters even if they have a simple design, the image can be efficiently cancelled.

In an eighth possible implementation form of the digital front end according to the eleventh implementation form of the first aspect, a first one of the two FIR filters comprises the coefficient set [c, 1, -c] and a second one of the two FIR filters comprises the coefficient set [-c, 1, c], where c is a constant which has an absolute value smaller than one, in particular smaller than 0.1, in particular smaller than 0.01.

This provides the advantage that these digital FIR filters have a low computational complexity and can be easily implemented on a chip design.

In a ninth possible implementation form of the digital front end according to the first aspect as such or according to any of the preceding implementation forms of the first aspect, the up-sampling unit comprises a first up-sampling stage and a second up-sampling stage.

This provides the advantage that different up-sampling factors can be applied.

In a tenth possible implementation form of the digital front end according to the first aspect as such or according to any of the preceding implementation forms of the first aspect, the digital front end further comprises a third up-sampling stage configured to up-sample the 8-phase DBB signal.

This provides the advantage that a higher data rate of the 8-phase DBB signal can be provided.

As already mentioned, the above reported examples of implementation forms are useful to understand the invention, but do not constitute a definition of the invention itself. The actual scope of the invention is solely defined by the appended claims.

BRIEF DESCRIPTION OF THE DRAWINGS

Further embodiments of the invention will be described with respect to the following figures, in which:

Fig. 1a shows a block diagram of a digital front end (DFE) 100 for a direct digital radio frequency modulator (DDRM) according to a first implementation form;

Fig. 1b shows a block diagram of a digital front end (DFE) 100 for a direct digital radio frequency modulator (DDRM) according to a second implementation form;

Fig. 1c shows a block diagram of a digital front end (DFE) 100 for a direct digital radio frequency modulator (DDRM) according to a third implementation form;

Fig. 2a shows a block diagram illustrating an analog quadrature up-converter 200a;

Fig. 2b shows a graph 200b illustrating exemplary analog up-conversion waveforms over time at a single-ended output;

Fig. 3 shows a block diagram illustrating a DDRM based transmitter 300;

Fig. 4 shows a block diagram of a DDRM system 400 with DFE section 410, DDRM section 420 and output balun 430;

Fig. 5 shows a block diagram of a DDRM system 500 with DFE section 510, DDRM section 520 and output balun 530 according to a first implementation form;

Fig. 6 shows a block diagram of a 4-phase to 8-phase converter according to a first implementation form;

Fig. 7 shows a block diagram of a 4-phase to 8-phase converter according to a second implementation form;

Fig. 8 shows a block diagram of a DDRM system 800 with DFE section 810, DDRM section 820 and output balun 830 according to a second implementation form;

Fig. 9 shows a block diagram of a DDRM system 900 with DFE section 910 including image cancellation 901, DDRM section 820 and output balun 830 according to a third (preferred) implementation form;

Figs. 10a and 10b show a block diagram of an in-phase part (Fig. 10a) and a quadrature part (Fig. 10b) of an FIR filter implementation for image cancellation according to an implementation form;

Figs. 11a, 11b, 11c and 11d show performance diagrams for a time domain signal and amplitude error when no cancellation is applied (Fig. 11a, 11b) and when image cancellation is applied (Fig. 11c, 11d);

Figs. 12a, 12b, 12c and 12d show performance diagrams for a phase error and image rejection of the time domain signal shown in Figures 11a to 11d when no cancellation is applied (Fig. 12a, 12b) and when image cancellation is applied (Fig. 12c, 12d);

Fig. 13 shows a block diagram of a DDRM system 1300 with DFE section 1310, DDRM section 820 and output balun 830 with 4-phase to 8-phase conversion at the full output data rate and no final stage of integer up-samplers according to a fourth implementation form;

Fig. 14 shows a block diagram of a 4-phase to 8-phase converter 1400 according to a third implementation form for use with the DDRM system 1300 of Fig. 13; and

Fig. 15 shows a schematic diagram of a method 1500 for converting a 4-phase digital baseband signal to an 8-phase digital output signal according to an implementation form.

## DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

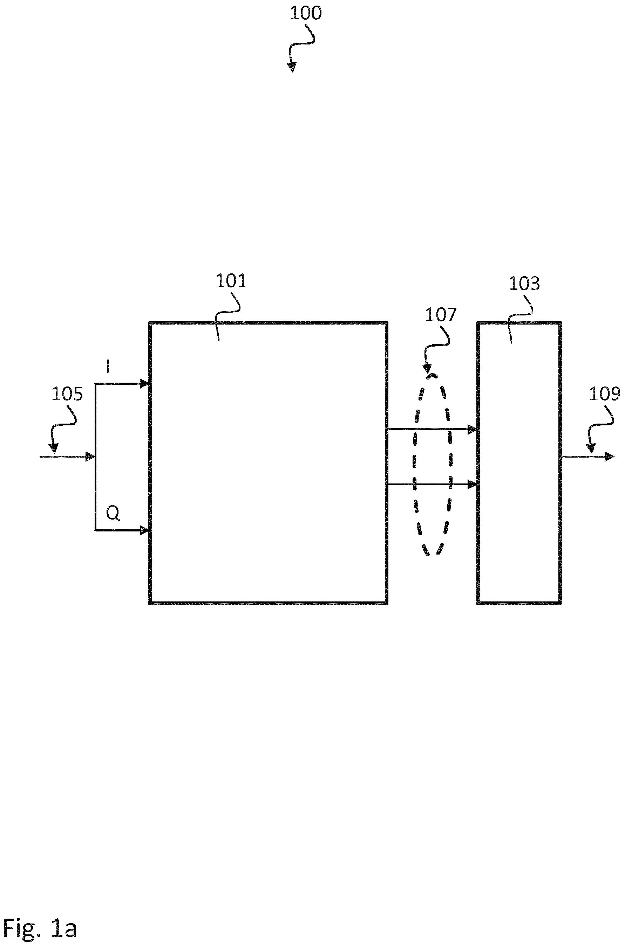

Fig. 1a shows a block diagram of a digital front end (DFE) 100 for a direct digital radio frequency modulator (DDRM) according to a first implementation form.

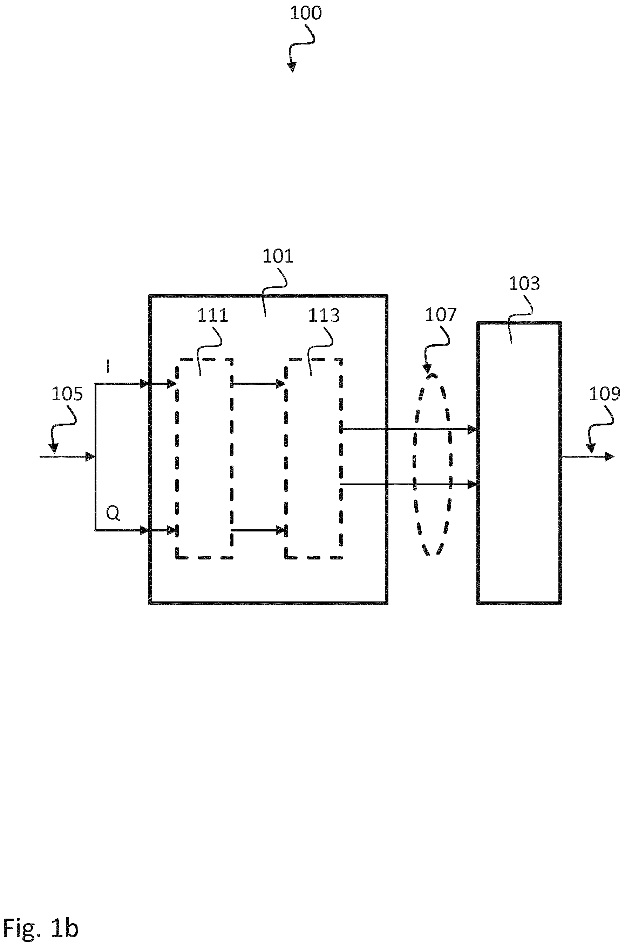

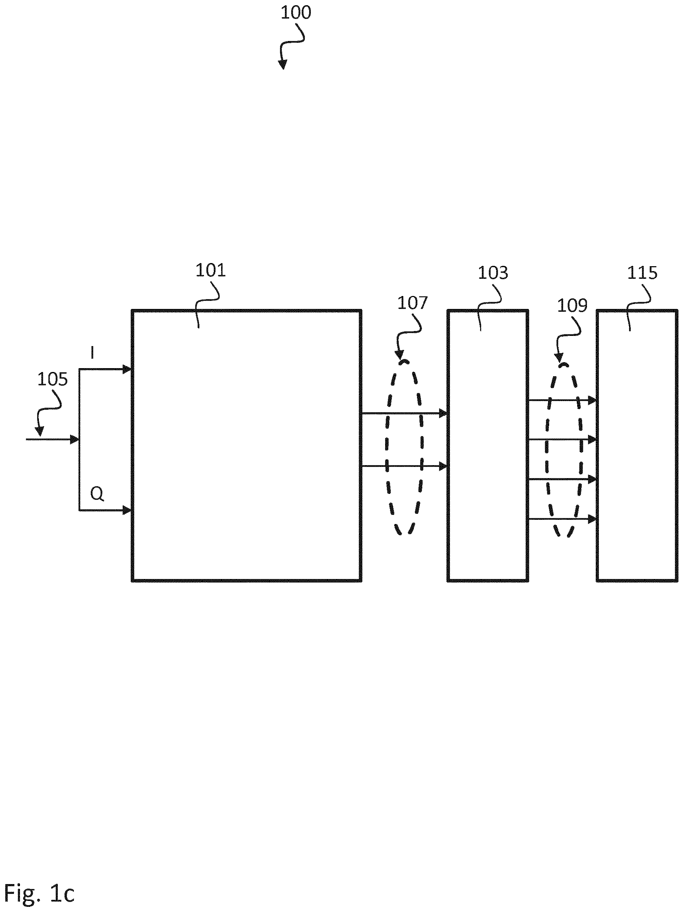

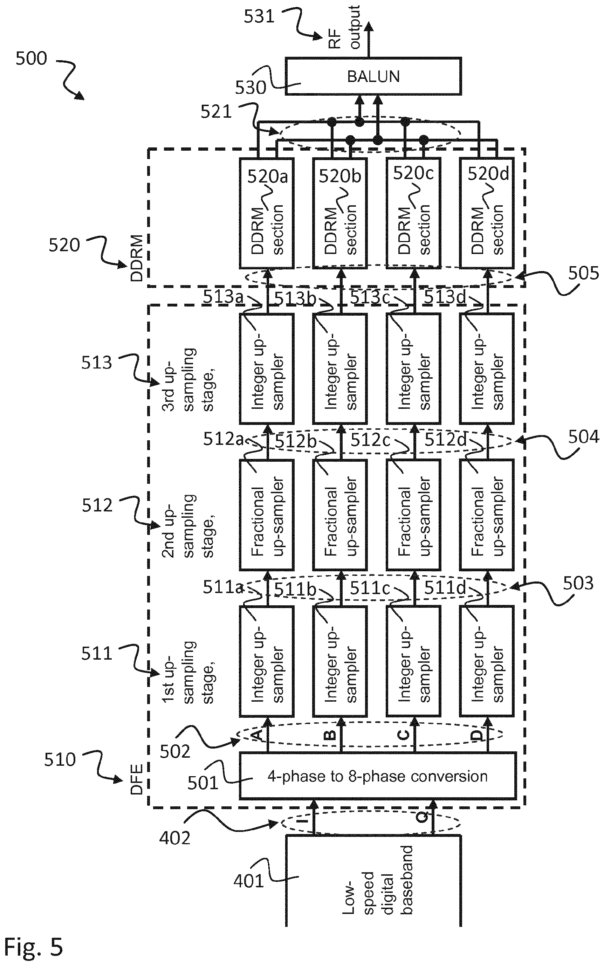

The DFE 100 includes an up-sampling unit 101 to provide an up-sampled 4-phase digital baseband (DBB) signal 107 including in-phase (I) and quadrature (Q) information 105. The DFE 100 further includes a conversion unit 103, configured to convert the up-sampled 4-phase DBB signal 107 to an 8-phase DBB signal 109. Different implementation forms of the DFE 100 are described below with respect to Figures 1b and 1c and in particular below with respect to Figures 5 to 14.

Fig. 1b shows a block diagram of a digital front end (DFE) 100 for a direct digital radio frequency modulator (DDRM) according to a second implementation form. In this implementation form, the up-sampling unit 101 includes a first up-sampling stage 111 and a second up-sampling stage 113. Different implementation forms of the first up-sampling stage 111 and a second up-sampling stage 113 are described below with respect to Figures 5 to 14.

Fig. 1c shows a block diagram of a digital front end (DFE) 100 for a direct digital radio frequency modulator (DDRM) according to a third implementation form. In this implementation form, the DFE 100 includes a third up-sampling stage 115 configured to up-sample the 8-phase DBB signal 109. Different implementation forms of the third up-sampling stage 115 are described below with respect to Figures 5 to 14.

Fig. 5 shows a block diagram of a DDRM system 500 with DFE section 510, DDRM section 520 and output balun 530 according to a first implementation form. Figure 5 describes the simplest form of an 8-phase DDRM by applying a straight-forward extension from the 4-phase DDRM 400 as described above with respect to Fig. 4 to 8-phase.

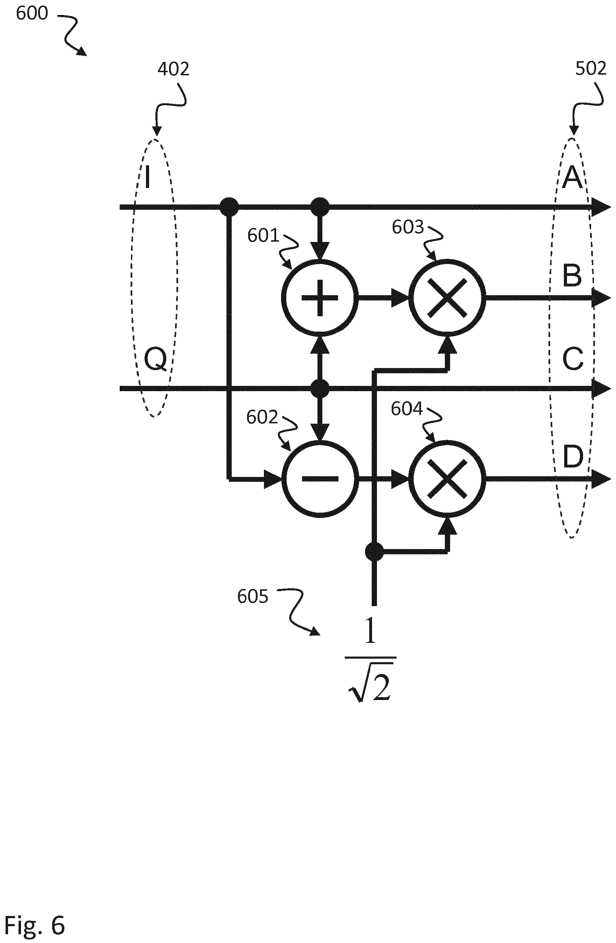

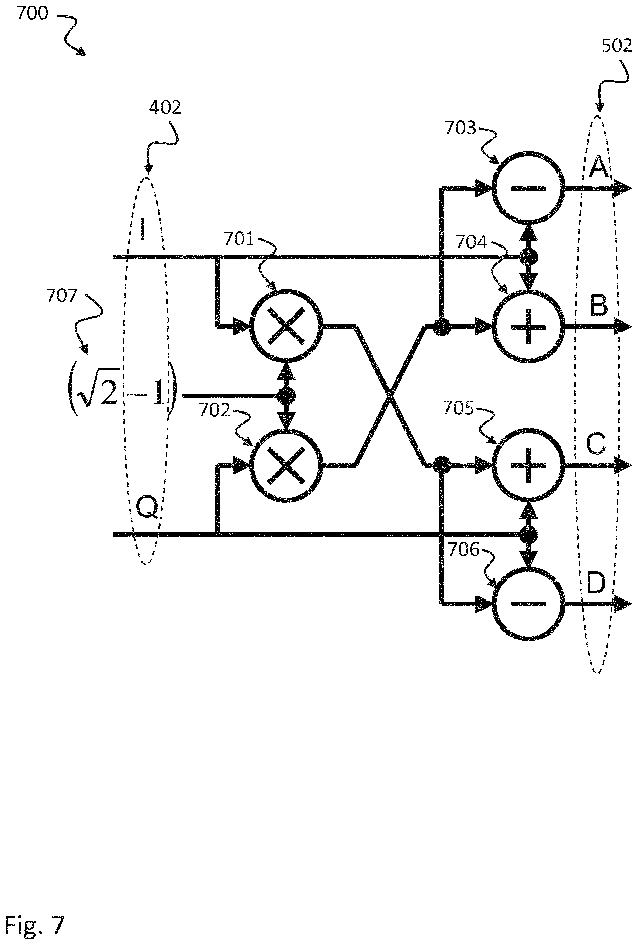

In this straight-forward 8-phase extension, all the blocks are provided 4 times instead of 2 times, doubling the DFE's supply power consumption. At the low speed interface 401 between digital signal processing, I and Q signals can be converted from 4-phase 402 (I and Q) to 8-phase (A, B, C, D) 502. There are several options to do so, two of them are shown below in Figures 6 and 7.

The DDRM system 500 includes a digital front end (DFE) section 510, a DDRM section 520 and an output balun 530. A low speed digital baseband signal 401 with differential in-phase (I) and quadrature (Q) components 402 is provided to the DFE section 510 where the baseband signal 401 is processed and an output signal 505 is provided to the DDRM section 520. The DDRMs 520a, 520b, 520c, 520d basically are a combination of several weighted slices consisting of a mixer and a power generation block as described above with respect to Fig. 3. Finally output signals of all four DDRMs 520a, 520b, 520c, 520d are combined by a combining unit 521 and provided to the output balun 530 to generate the RF output signal 531.

The differential in-phase (I) and quadrature (Q) components 402 provide a 4-phase signal while the differential components (A, B, C, D) 502 provide an 8-phase signal. Due to this architecture, the DDRM system 500 is also called as 8-phase DDRM system. Note that the differential I and Q signal components and also the differential A, B, C and D signal components do not have to be fully differential in the sense that their sum does not have to be constant. The only constraint is that they should have 180 degrees of an RF cycle phase difference (=TLO/2). They can have duty cycles that differ from 50%.

The DFE section 510 includes a first up-sampling stage 511 including integer up-samplers 511a, 511b, 511c and 511d, a second up-sampling stage 512 including fractional up-samplers 512a, 512b, 512c and 512d and a third up-sampling stage 513 including integer up-samplers 513a, 513b, 513c and 513d.

The first (optional) up-sampling stage 511 is increasing the data rate from the typically low data rate provided by the baseband processing unit 401, to some higher data rate. This up-sampler 511a, 511b, 511c and 511d may have an integer up-sampling ratio. The second (optional) up-sampling stage 512 is further increasing the data rate. This second up-sampler 512a, 512b, 512c, and 512d may have a fractional, i.e. a non-integer up-sampling ratio. This filter 512a, 512b, 512c and 512d is typically the one with the highest power consumption. The third (optional) up-sampling stage 513, is running at the highest data rate, typically ¼, ½, 1 or 2 times the RF frequency. At this very high frequency, complexity needs to be low to keep supply power reasonably low.

The 4-phase to 8-phase conversion unit 501 can be implemented as shown in Figure 6.

Fig. 6 shows a block diagram of a 4-phase to 8-phase converter 600 according to a first implementation form. The 4-phase to 8-phase converter 600 includes an adding logic 601, a subtraction logic 602 and two multiplication logics 603, 604. The 4-phase input signal 402 is converted to the 8-phase output signal 502 by implementing the following equation:

$$A = I$$
$$B = \sqrt{\frac{1}{2}}(I + Q)$$
$$C = Q$$
$$D = \sqrt{\frac{1}{2}}(I - Q)$$

The digital combination logic 600 may provide the 8-phase output signal 502 based on addition 601, subtraction 602 and multiplication 603, 604 of respective ones of the in-phase (I) and quadrature (Q) signal components.

Note that many other similar structures are possible, e.g., by using linear scaling of these equations.

This 4-phase to 8-phase converter 600 may be part of the baseband processing block 401 or the digital front end block 510.

Fig. 7 shows a block diagram of a 4-phase to 8-phase converter according to a second implementation form. The 4-phase to 8-phase converter 700 includes an adding logic two multiplication logics 701, 702, two subtraction logics 703, 706 and two adding logics 704, 705. The 4-phase input signal 402 is converted to the 8-phase output signal 502 by implementing the following equation:

$$A = I - (\sqrt{2} - 1)Q$$
$$B = I + (\sqrt{2} - 1)Q$$
$$C = Q + (\sqrt{2} - 1)I$$
$$D = Q - (\sqrt{2} - 1)I$$

The digital combination logic 700 may provide the 8-phase output signal 502 based on addition 704, 705, subtraction 703, 706 and multiplication 701, 702 of respective ones of the in-phase (I) and quadrature (Q) signal components 402.

Note that many other similar structures are possible, e.g., by using linear scaling of these equations.

This 4-phase to 8-phase converter 700 may be part of the baseband processing block 401 or the digital front end block 510.

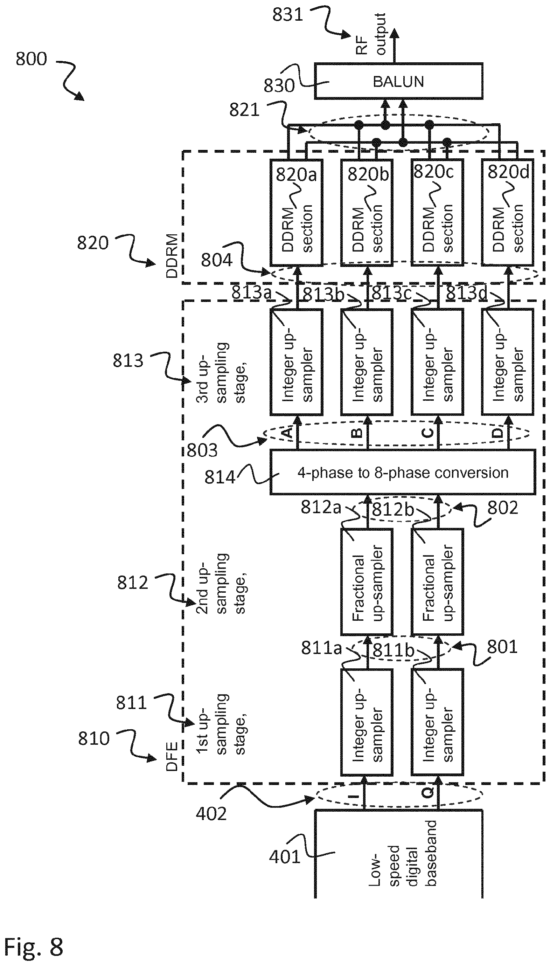

Fig. 8 shows a block diagram of a DDRM system 800 with DFE section 810, DDRM section 820 and output balun 830 according to a second implementation form.

The DDRM system 800 includes a digital front end (DFE) section 810, a DDRM section 820 and an output balun 830. A low speed digital baseband signal 401 with differential in-phase (I) and quadrature (Q) components 402 is provided to the DFE section 810 where the baseband signal 401 is processed and an output signal 804 is provided to the DDRM section 820. The DDRMs 820a, 820b, 820c, 820d basically are a combination of several weighted slices consisting of a mixer and a power generation block as described above with respect to Figs. 3 and 5. Finally output signals of all four DDRMs 820a, 820b, 820c, 820d are combined by a combining unit 821 and provided to the output balun 830 to generate the RF output signal 831.

The differential in-phase (I) and quadrature (Q) components 402 provide a 4-phase signal while the differential components (A, B, C, D) 803 provide an 8-phase signal. Due to this architecture, the DDRM system 800 is also called as 8-phase DDRM system. Note that the differential I and Q signal components and also the differential A, B, C and D signal components do not have to be fully differential in the sense that their sum does not have to be constant. The only constraint is that they should have 180 degrees of an RF cycle phase difference (=TLO/2). They can have duty cycles that differ from 50%.

The DFE section 810 includes a first up-sampling stage 811 including integer up-samplers 811a, 811b, a second up-sampling stage 812 including fractional up-samplers 812a, 812b and a third up-sampling stage 813 including integer up-samplers 813a, 813b, 813c and 813d.

The first (optional) up-sampling stage 811 is increasing the data rate from the typically low data rate provided by the baseband processing unit 401, to some higher data rate. This up-sampler 811a, 811b may have an integer up-sampling ratio. The second (optional) up-sampling stage 812 is further increasing the data rate. This second up-sampler 812a, 812b may have a fractional, i.e. a non-integer up-sampling ratio. This filter 812a, 812b is typically the one with the highest power consumption. The third (optional) up-sampling stage 813, is running at the highest data rate, typically ¼, ½, 1 or 2 times the RF frequency. At this very high frequency, complexity needs to be low to keep supply power reasonably low.

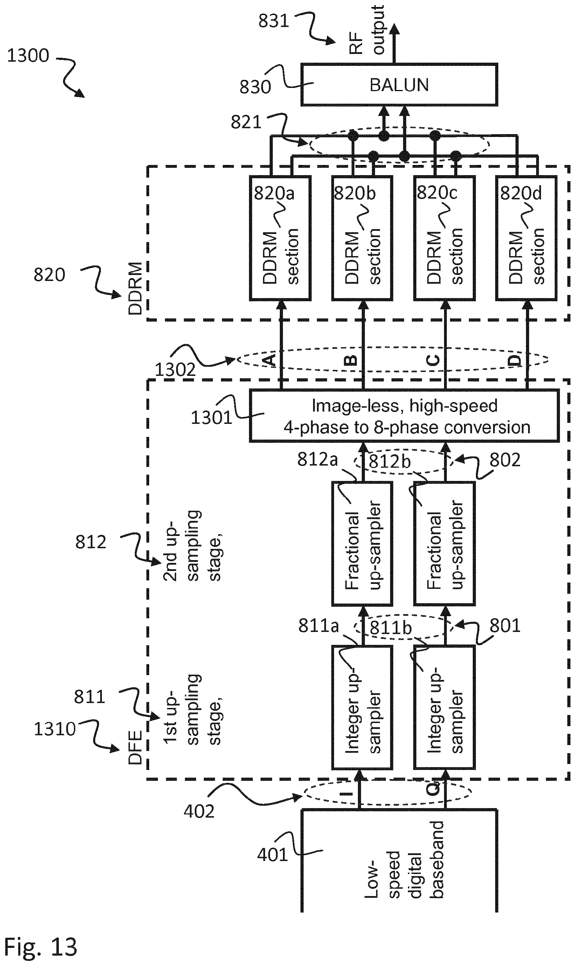

The 4-phase to 8-phase conversion unit 501 can be implemented as shown in Figures 6 and 7 or alternatively in Fig. 13.

The DFE 810 shown in Fig. 8 can be used with the DDRM 820 shown in Fig. 8. However, it can also be used with other electronic circuits, e.g. with Digital-to-Analog Converter etc. The DFE 810 includes an input, at least one up-sampling unit 811, 812, a conversion unit 814 and an output. The input receives a 4-phase digital baseband signal 402 which 4 phases comprise differential in-phase (I) and quadrature (Q) signal components. The at least one up-sampling unit 811, 812 is configured to up-sample the 4-phase digital baseband signal 402 to a 4-phase first digital signal 801, 802. The conversion unit 814 converts the 4-phase first digital signal 801, 802 to an 8-phase second digital signal 803 which 8 phases comprise differential first (A), second (B), third (C) and fourth (D) signal components. The output provides a digital output signal 804 based on the 8-phase second digital signal 803. Between the output of the conversion unit 814, an (optional) third up-sampling stage 813 may be implemented having integer up-samplers 813a, 813b, 813c, 813d.

Different configurations are possible. In a DFE with one up-sampling unit 811, the 4-phase digital baseband signal 402 is up-sampled by the integer up-samplers 811a, 811b to a 4-phase first digital signal 801 that is converted by the 4-phase to 8-phase converter 814 to an 8-phase second digital signal 803. In a DFE with two up-sampling units 811, 812, the 4-phase digital baseband signal 402 is up-sampled by the integer up-samplers 811a, 811b and further up-sampled by the fractional up-samplers 812a, 812b to a 4-phase first digital signal 802 that is converted by the 4-phase to 8-phase converter 814 to an 8-phase second digital signal 803.

The conversion unit 814 may include a digital combination logic, e.g. a combination logic 600, 700 as described above with respect to Figures 6 and 7 or a combination logic 1300 as described below with respect to Fig. 13, to provide the 8-phase second digital signal 803 based on combinations of the in-phase (I) and quadrature (Q) signal components of the first digital signal 801, 802.

The digital combination logic 600, 700 may provide the combinations of the in-phase (I) and quadrature (Q) signal components based on addition 601, subtraction 602 and multiplication 603, 604 of respective ones of the in-phase (I) and quadrature (Q) signal components.

The digital combination logic 600 when using the design of Fig. 6 may generate the following combinations: $A = I$; $B = \sqrt{0.5}(I + Q)$ ; $C = Q$; $D = \sqrt{0.5}(I - Q)$ or any linear scaling of these combinations, where I and Q are the in-phase and quadrature signal components of the first digital signal 801, 802 and A, B, C, D are the first, second, third and fourth signal components of the second digital signal 803.

The digital combination logic 700 when using the design of Fig. 7 may generate the following combinations: $A = I - (\sqrt{2} - 1)Q$ ; $B = I + (\sqrt{2} - 1)Q$ ; $C = Q + (\sqrt{2} - 1)I$ ; $D = Q - (\sqrt{2} - 1)I$ or any linear scaling of these combinations, where I and Q are the in-phase and quadrature signal components of the first digital signal 801, 802 and A, B, C, D are the first, second, third and fourth signal components of the second digital signal 803.

The up-sampling stage 811 may include one or more integer up-samplers having an integer up-sampling ratio. The up-sampling stage 812 may include one or more fractional up-samplers having a non-integer up-sampling ratio.

The DFE 810 may include one or more third up-sampling stages 813 that may have an integer up-sampling ratio to up-sample the 8-phase second digital signal 803 to generate an 8-phase third digital signal 804. In the implementation of Fig. 8 the 8-phase third digital signal 804 is the output signal of the DFE 810. However, any other signal processing, e.g. further up-sampling or filtering, may be used before providing an 8-phase output signal at the output of the DFE section 810. Thus, the output provides the digital output signal based on the 8-phase third digital signal 804.

The direct digital radio frequency modulator (DDRM) shown in Figure 8 includes the digital front end 810 to provide the 8-phase digital output signal 804 and the modulation section 820 to generate a radio frequency (RF) signal 831 based on a modulation of the 8-phase digital output signal 804, e.g. as described above with respect to Fig. 3.

With respect to the DDRM system shown in Fig. 5, the 4-phase to 8-phase conversion 814 is simply moved from the low baseband data rate to the higher data rate after fractional up-sampling 812. This already solves the core problem of the increased current consumption due to increased number of (1st) integer 811 and (2nd) fractional up-samplers 812. The 4-phase to 8-phase conversion 814 may be implemented according to the design shown in Figures 6 and 7.

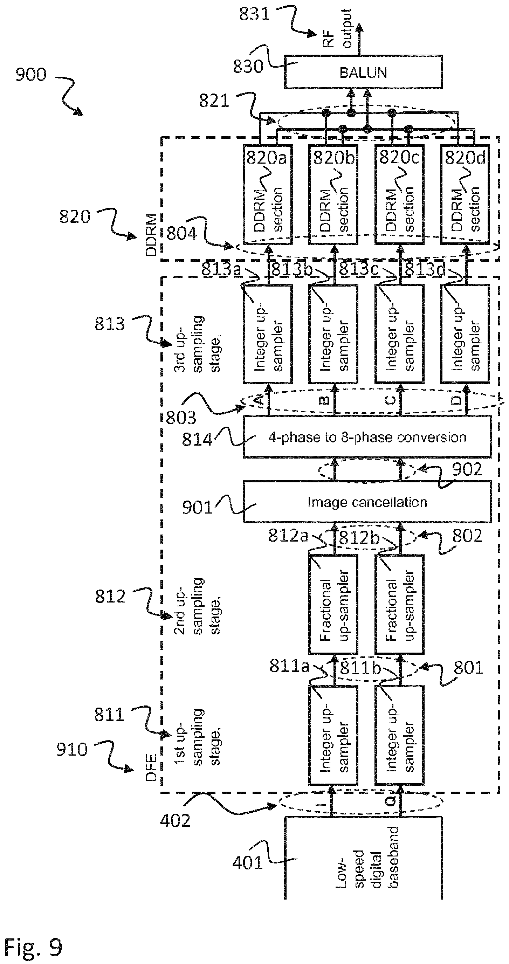

For low baseband bandwidth, approx. 1-2 % of the RF frequency, depending on up-sampling rate of the 3rd stage 813, and also depending on the specification of acceptable image transmission, the configuration of Fig. 8 may in some application be sufficient. However, this is not the preferred embodiment, as for systems with high bandwidth the image transmission will be an issue. A preferred embodiment with image cancellation is shown in Figure 9.

Fig. 9 shows a block diagram of a DDRM system 900 with DFE section 910 including image cancellation 901, DDRM section 820 and output balun 830 according to a third (preferred) implementation form. This is the preferred embodiment with image cancellation. The DDRM system 900 corresponds to the DDRM system 800 described above with respect to Fig. 8, in which an additional block 901 for image cancellation is included between the second up-sampling stage 812 and the conversion unit 814. The image cancellation section 901 is inserted into the chain of the DFE 910. This could potentially also be done in the baseband section 401, but wider bandwidth of image rejection is probably achieved when inserting it, as shown here in Fig. 9, directly before the 4-phase to 8-phase conversion 814. Potentially (not shown) it could also be placed after the last integer up-sampler 813, but there it would run at an even higher data rate and consume more power.

In the implementation shown in Fig. 9, the image cancellation unit 901 is coupled between the input and the output of the DFE 910. The image cancellation unit 901 is configured to cancel an undesired image signal caused by a phase error of the DFE 910, e.g. due to the phase conversion of the conversion unit 814.

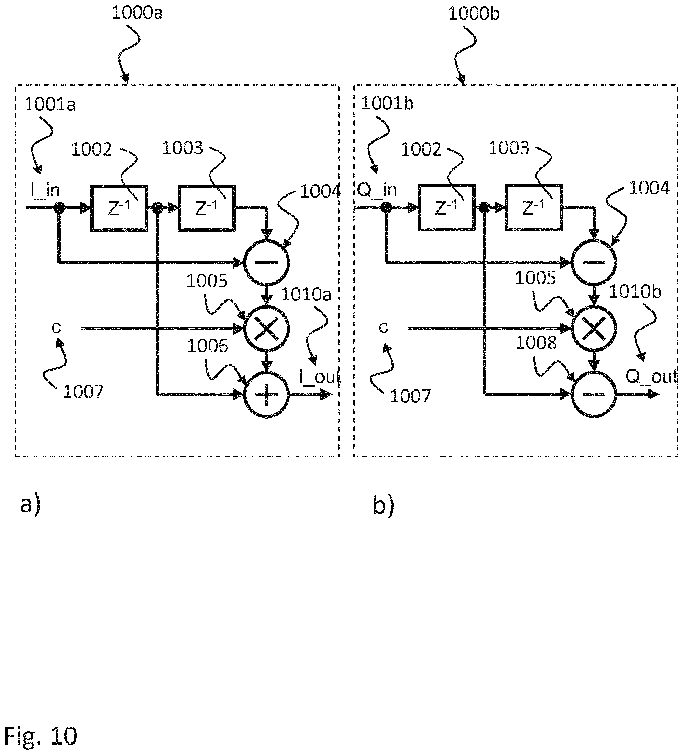

In an implementation, the image cancellation unit 901 may include two digital FIR filters, e.g. FIR filters 1000a, 1000b as shown below with respect to Figures 10 and 10b with different phase frequency responses. A first one 1000a of the two FIR filters may include the coefficient set [c, 1, -c] or any linear scaling thereof. A second one 1000b of the two FIR filters may include the coefficient set [-c, 1, c] or any linear scaling thereof. c is a constant which has an absolute value smaller than one, e.g. smaller than 0.1 or even smaller than 0.01.

Figs. 10a and 10b show a block diagram of an in-phase part (Fig. 10a) and a quadrature part (Fig. 10b) of an FIR filter implementation for image cancellation according to an implementation form.

One possible, simple way to do the image cancellation 901 described above with respect to Fig. 9 is to apply finite impulse response (FIR) filters to I and Q data with different phase response or different group delay. A simple set of coefficients for such filters is [c, 1, -c] for I and [-c, 1, c] for Q data, where c is some constant that is typically much smaller than 1, and could be positive or negative. Equivalently, z-domain transfer functions of I and Q filters would be $c \cdot z^0 + 1 \cdot z^{-1} - c \cdot z^{-2}$ for I and $- c \cdot z^0 + 1 \cdot z^{-1} + c \cdot z^{-2}$ for Q. Both filters 1000a, 1000b have the same amplitude frequency response, but different phase frequency response. They can therefore correct phase errors that are proportional to frequency.

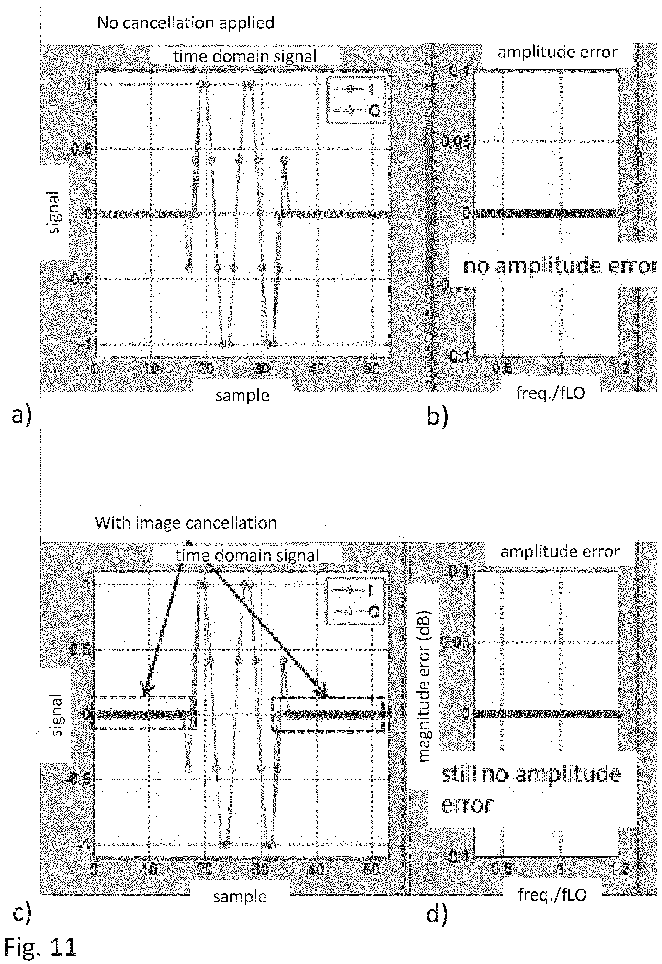

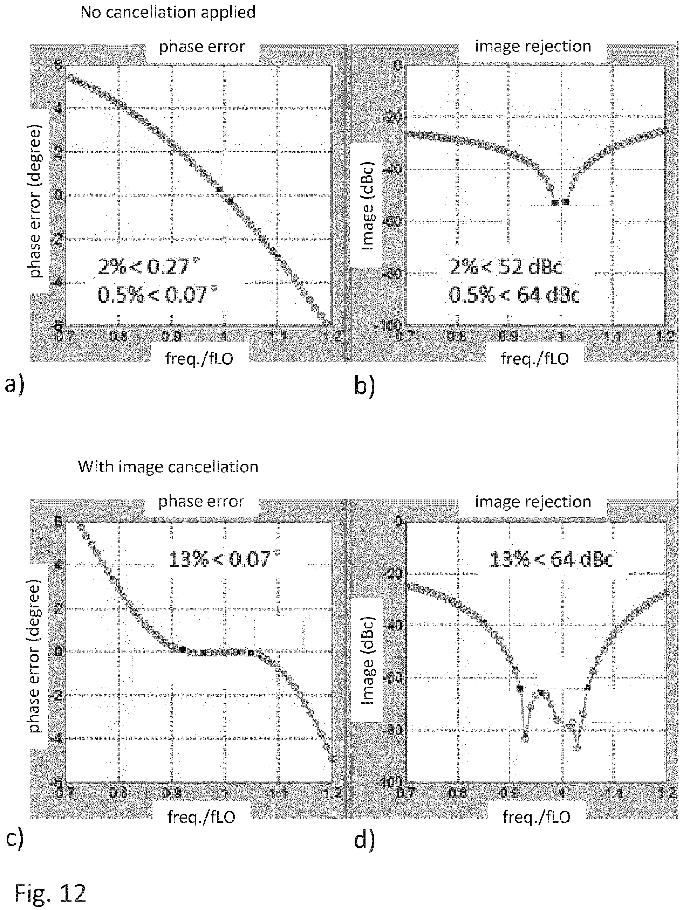

Figs. 11a, 11b, 11c and 11d show performance diagrams for a time domain signal and amplitude error when no cancellation is applied (Fig. 11a, 11b) and when image cancellation is applied (Fig. 11c, 11d). Figs. 12a, 12b, 12c and 12d show performance diagrams for a phase error and image rejection of the time domain signal shown in Figures 11a to 11d when no cancellation is applied (Fig. 12a, 12b) and when image cancellation is applied (Fig. 12c, 12d). Fig. 12a shows the phase error with no image rejection according to the DDRM system of Fig. 8. Fig. 12b shows image transmission with no image rejection in dBc according to the DDRM system of Fig. 8. Fig. 12c shows the phase error with image rejection according to the DDRM system of Figs. 9 and 10. Fig. 12d shows image transmission with image rejection in dBc according to the DDRM system of Figs. 9 and 10.

As can be seen, when applying image rejection (Figures 12b and 12d), there is a large bandwidth with very little phase error and consequently with very low level of image transmission (here < 52 dBc over 2% of the RF frequency). The frequency range of phase error is smaller than 0.07 degree, i.e. 0.0012 rad. Image is smaller than -64 dBc corresponding to an increase in bandwidth from 0.5% to 13%.

Fig. 13 shows a block diagram of a DDRM system 1300 with DFE section 1310, DDRM section 1320 and output balun 1330 with 4-phase to 8-phase conversion at the full output data rate and no final stage of integer up-samplers according to a fourth implementation form.

The DDRM system 1300 corresponds to the DDRM system 800 described above with respect to Fig. 8, in which the third up-sampling stage 813 is removed and an image-less, high-speed 4-phase to 8-phase conversion block 1301 is included after the second up-sampling stage 812.

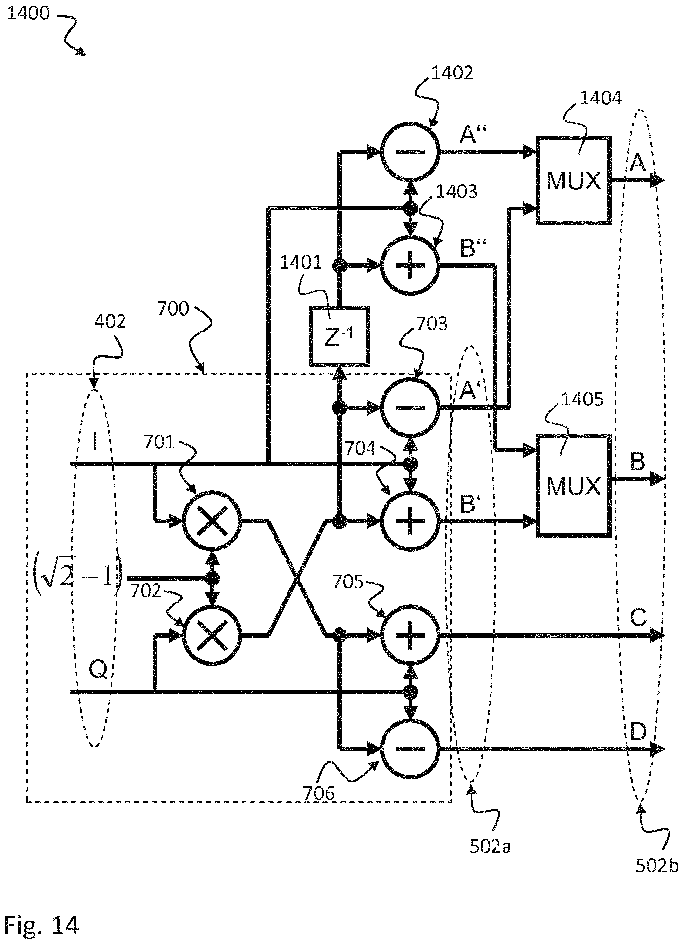

The DDRM system 1300 together with the design of Figure 14 provides an alternative way of solving the image problem. Instead of causing an image in the 4-phase to 8-phase conversion, and compensating it by introducing an opposite phase error with FIR filters as shown above in Figs. 9-12, the implementation of Figs. 13 and 14 completely eliminates the problem.

The conversion unit 1301 suppresses an undesired image signal caused by a phase error of the DFE 1310, in particular due to the phase conversion of the conversion unit 1301. The conversion unit 1301 may be designed as shown in Figure 14.

Fig. 14 shows a block diagram of a 4-phase to 8-phase converter 1400 according to a third implementation form for use with the DDRM system 1300 of Fig. 13. The conversion unit 1400 includes a delay element 1401 to delay the quadrature component (Q) of the 4-phase digital signal 402 or alternatively the in-phase component (I). The conversion unit 1301 provides delayed versions (A",B") of the first (A) and second (B) signal components based on the delayed quadrature component (Q) of the 4-phase digital signal 402. The conversion unit 1400 includes a multiplexer 1404, 1405 to multiplex between switching the first and second signal components (A', B') and their delayed versions (A", B") to the first and second signal components (A, B) of the 8-phase digital signal 502b. Depending on the multiplexers 1404, 1405, the following signals may be switched as 8-phase signal 502b: A', B', C, D or A", B", C, D or A", B', C, D or A', B", C, D.

The image does not occur, when multiplexers (MUX) 1404, 1405 and delay element ($z^{-1}$) 1401 are added to the system. At every change of data coming in at I and Q, for the first quarter LO cycle, the 'old' Q data (delayed by block $z^{-1}$ 1401) along with the 'new' I data is used, so the multiplexers (MUX) 1404, 1405 select A" and B" instead of A' and B' to be applied to outputs A and B. This makes sense, because Q data are typically sampled (or "interpolated" by the fractional up-sampler) a quarter LO period = 2 DDRM phases later than I data.

The better image rejection of this solution comes at the cost of higher complexity, probably higher power consumption and tighter timing constraints in the 4-phase to 8-phase conversion.

More important, as the select signal of the MUX needs to change within a single LO cycle, this is not compatible with a subsequent (integer) un-sampling stage, as in this case, the data rate at outputs A, B, C, D (= inputs of that sub-sequent up-sampler) is only a fraction of the LO frequency; so sub-LO-cycle changes of the select signal cannot be implemented. Therefore, Figure 13 does not show a 3rd up-sampling stage.

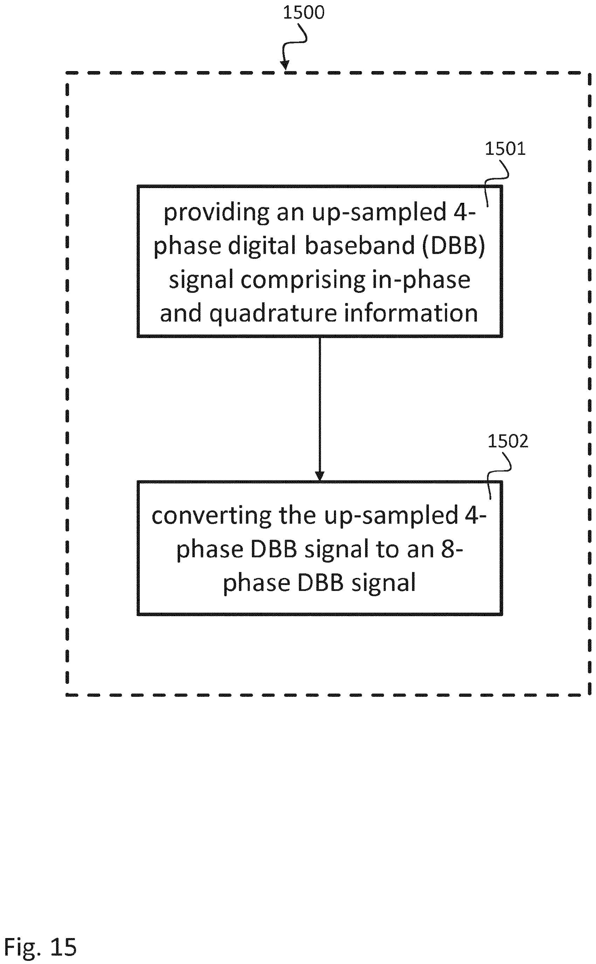

Fig. 15 shows a schematic diagram of a method 1500 for converting a 4-phase digital baseband signal to an 8-phase digital output signal according to an implementation form.

The method 1500 includes providing 1501 an up-sampled 4-phase digital baseband signal comprising in-phase and quadrature information, e.g. as described above with respect to Figures 4 to 14. The method 1500 includes converting 1503 the up-sampled 4-phase DBB signal to an 8-phase DBB signal, e.g. by the conversion unit 814 as described above with respect to Figure 8.

The present disclosure also supports a computer program product including computer executable code or computer executable instructions that, when executed, causes at least one computer to execute the performing and computing steps described herein, in particular the steps of the method 1500 described above with respect to Figure 15. Such a computer program product may include a readable non-transitory storage medium storing program code thereon for use by a computer. The program code may perform the method 1500 described above with respect to Fig. 15.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects within the scope of the appended claims.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

## Claims

1. A digital front end, DFE (100), for a direct digital radio frequency modulator (DDRM), the DFE comprising:

   an up-sampling unit (101), configured to provide an up-sampled 4-phase digital baseband, DBB, signal (107) comprising in-phase (I) and quadrature (Q) information (105); and
   a conversion unit (103), configured to convert the up-sampled 4-phase DBB signal (107) to an 8-phase DBB signal (109),
   **characterized in that**
   the up-sampling unit (101, 811, 812) comprises at least one of an integer up-sampler (811) having an integer up-sampling ratio and a fractional up-sampler (812) having a non-integer up-sampling ratio,
   wherein the conversion unit (103, 1301) is configured to suppress an undesired image signal caused by a phase error of the DFE (1310), in particular due to the phase conversion of the conversion unit (1301),
   wherein the conversion unit (103, 1301) comprises a delay element (1401) configured to delay the quadrature information (Q) of the up-sampled 4-phase DBB signal (107, 801, 802);
   wherein the conversion unit (103, 1301) is configured to provide delayed versions (A'',B'') of in-phase and quadrature information of the 8-phase DBB signal (109) based on the delayed quadrature information (Q) of the 4-phase DBB signal (107, 801, 802), and
   wherein the conversion unit (1301) comprises a multiplexer (1404, 1405) configured to multiplex between switching the in-phase and quadrature information (A', B') of the 8-phase DBB signal (109) and their delayed versions (A'', B'') to the in-phase and quadrature information (A, B) of the 8-phase DBB signal (109, 1302).

2. The DFE (100, 810) of claim 1,
   wherein the conversion unit (103) comprises a digital combination logic (600, 700, 1400) configured to provide the 8-phase DBB signal (109, 803, 1302) based on combinations of the in-phase (I) and quadrature (Q) information (105).

3. The DFE (100, 810) of claim 2,
   wherein the digital combination logic (600, 700, 1400) is configured to provide the combinations of the in-phase (I) and quadrature (Q) information based on addition (601), subtraction (602) and multiplication (603, 604) of respective ones of the in-phase (I) and quadrature (Q) information (105).

4. The DFE (100, 810) of claim 2 or 3,
   wherein the digital combination logic (600, 700, 1400) is configured to generate the following combinations: $A = I$; $B = \sqrt{0.5}(I+Q)$ ; $C = Q$; $D = \sqrt{0.5}(I-Q)$ or any linear scaling of these combinations, where I and Q are the in-phase and quadrature information of the up-sampled 4-phase DBB signal (107, 801, 802).

5. The DFE (100, 810) of claim 2 or 3,
   wherein the digital combination logic (600, 700, 1400) is configured to generate the following combinations: $A = I - (\sqrt{2}-1)Q$ ; $B = I + (\sqrt{2}-1)Q$ ; $C = Q + (\sqrt{2}-1)I$ ; $D = Q - (\sqrt{2}-1)I$ or any linear scaling of these combinations, where I and Q are the in-phase and quadrature information of the up-sampled 4-phase DBB signal (107, 801, 802).

6. The DFE (100, 810) of one of claims 1 to 5, comprising:
   at least one second up-sampling unit (813), in particular having an integer up-sampling ratio, configured to up-sample the 8-phase DBB signal (109, 803) to generate an up-sampled 8-phase DBB signal (804).

7. The DFE (100, 910) of one of the preceding claims, comprising:
   an image cancellation unit (901) configured to cancel an undesired image signal caused by a phase error of the DFE (910), in particular due to phase conversion of the conversion unit (814).

8. The DFE (100, 910) of claim 7,
   wherein the image cancellation unit (901) comprises two digital FIR filters (1000a, 1000b) with different phase frequency responses.

9. The DFE (100, 910) of claim 8,
   wherein a first one (1000a) of the two FIR filters (1000a, 1000b) comprises the coefficient set [c, 1, -c] and a second one (1000b) of the two FIR filters (1000a, 1000b) comprises the coefficient set [-c, 1, c], where c is a constant which has an absolute value smaller than one, in particular smaller than 0.1, in particular smaller than 0.01.

10. The DFE (100) of one of the preceding claims,
    wherein the up-sampling unit (101) comprises a first up-sampling stage (111) and a second up-sampling stage (113).

11. The DFE (100) of one of the preceding claims, comprising:

a third up-sampling stage (115) configured to up-sample the 8-phase DBB signal (109).

**Patentansprüche**

1. Digitales Front-End, DFE (100), für einen direkten digitalen Funkfrequenzmodulator (DDRM), wobei das DFE umfasst:

   eine Aufwärtsabtasteinheit (101), die zum Bereitstellen eines aufwärtsabgetasteten vierphasigen digitalen Basisband-, DBB-Signals (107) konfiguriert ist, das Inphase(I)- und Quadratur(Q)-Informationen (105) umfasst;
   eine Umwandlungseinheit (103), die zum Umwandeln des aufwärtsabgetasteten vierphasigen DBB-Signals (107) in ein achtphasiges DBB-Signal (109) konfiguriert ist,
   **dadurch gekennzeichnet, dass**
   dass die Aufwärtsabtasteinheit (101, 811, 812) mindestens einen Ganzzahl-Aufwärtsabtaster (811) mit einem ganzzahligen Aufwärtsabtastverhältnis und einen Bruchzahl-Aufwärtsabtaster (812) mit einem nicht ganzzahligen Aufwärtsabtastverhältnis umfasst,
   wobei die Umwandlungseinheit (103, 1301) so konfiguriert ist, dass sie ein unerwünschtes Bildsignal unterdrückt, das durch einen Phasenfehler des DFE (1310), insbesondere aufgrund der Phasenumwandlung der Umwandlungseinheit (1301), verursacht wird,
   wobei die Umwandlungseinheit (103, 1301) ein Verzögerungselement (1401) umfasst, das zum Verzögern der Quadraturinformationen (Q) des aufwärtsabgetasteten vierphasigen DBB-Signals (107, 801, 802) konfiguriert ist;
   wobei die Umwandlungseinheit (103, 1301) zum Bereitstellen von verzögerten Versionen (A", B") von Inphase- und Quadraturinformationen des achtphasigen DBB-Signals (109) basierend auf den verzögerten Quadraturinformationen (Q) des vierphasigen DBB-Signals (107, 801, 802) konfiguriert ist, und
   wobei die Umwandlungseinheit (1301) einen Multiplexer (1404, 1405) umfasst, der zum Multiplexen zwischen einem Wechseln der Inphase- und Quadraturinformationen (A', B') des achtphasigen DBB-Signals (109) und ihrer verzögerten Versionen (A", B") auf die Inphase- und Quadraturinformationen (A, B) des achtphasigen DBB-Signals (109, 1302) konfiguriert ist.

2. DFE (100, 810) nach Anspruch 1,
   wobei die Umwandlungseinheit (103) eine digitale Kombinationslogik (600, 700, 1400) umfasst, die zum Bereitstellen des achtphasigen DBB-Signals (109, 803, 1302) basierend auf Kombinationen der Inphase(I)- und Quadratur(Q)-Informationen (105) konfiguriert ist.

3. DFE (100, 810) nach Anspruch 2,
   wobei die digitale Kombinationslogik (600, 700, 1400) zum Bereitstellen der Kombinationen der Inphase(I)- und Quadratur(Q)-Informationen basierend auf Addition (601), Subtraktion (602) und Multiplikation (603, 604) von jeweiligen der Inphase(I)- und Quadratur(Q)-Informationen (105) konfiguriert ist.

4. DFE (100, 810) nach Anspruch 2 oder 3,
   wobei die digitale Kombinationslogik (600, 700, 1400) zum Erzeugen der folgenden Kombinationen konfiguriert ist: $A = I$; $B = \sqrt{0{,}5}(I + Q)$; $C = Q$; $D = \sqrt{0{,}5}(I - Q)$ oder eine beliebige lineare Skalierung dieser Kombinationen, wobei I und Q die Inphase- und Quadraturinformationen des aufwärtsabgetasteten vierphasigen DBB-Signals (107, 801, 802) sind.

5. DFE (100, 810) nach Anspruch 2 oder 3,
   wobei die digitale Kombinationslogik (600, 700, 1400) zum Erzeugen der folgenden Kombinationen konfiguriert ist: $A - I - \left(\sqrt{2} - 1\right)Q$; $B - I + \left(\sqrt{2} - 1\right)Q$; $C - Q + \left(\sqrt{2} - 1\right)I$; $D - Q - \left(\sqrt{2} - 1\right)I$ oder eine beliebige lineare Skalierung dieser Kombinationen, wobei I und Q die Inphase- und Quadraturinformationen des aufwärtsabgetasteten vierphasigen DBB-Signals (107, 801, 802) sind.

6. DFE (100, 810) nach einem der Ansprüche 1 bis 5, umfassend:
   mindestens eine zweite Aufwärtsabtasteinheit (813), insbesondere mit einem ganzzahligen Aufwärtsabtastverhältnis, die so konfiguriert ist, dass sie das achtphasige DBB-Signal (109, 803) aufwärtsabtastet, um ein aufwärtsabgetastetes achtphasiges DBB-Signal (804) zu erzeugen.

7. DFE (100, 910) nach einem der vorhergehenden Ansprüche, umfassend:
   eine Bildauslöschungseinheit (901), die zum Auslöschen eines unerwünschten Bildsignals konfiguriert ist, das durch einen Phasenfehler des DFE (910), insbesondere aufgrund der Phasenumwandlung der Umwandlungseinheit (814), verursacht wird.

8. DFE (100, 910) nach Anspruch 7,

wobei die Bildauslöschungseinheit (901) zwei digitale FIR-Filter (1000a, 1000b) mit verschiedenen Phasenfrequenzgängen umfasst.

9. DFE (100, 910) nach Anspruch 8,
wobei ein erstes (1000a) der beiden FIR-Filter (1000a, 1000b) den Koeffizientensatz [c, 1, -c] umfasst, und ein zweites (1000b) der beiden FIR-Filter (1000a, 1000b) den Koeffizientensatz [-c, 1, c] umfasst, wobei c eine Konstante ist, die einen absoluten Wert kleiner als eins, insbesondere kleiner als 0,1, insbesondere kleiner als 0,01 aufweist.

10. DFE (100) nach einem der vorhergehenden Ansprüche,
wobei die Aufwärtsabtasteinheit (101) eine erste Aufwärtsabtaststufe (111) und eine zweite Aufwärtsabtaststufe (113) umfasst.

11. DFE (100) nach einem der vorhergehenden Ansprüche, ferner umfassend:
eine dritte Aufwärtsabtaststufe (115), die zum Aufwärtsabtasten des achtphasigen DBB-Signals (109) konfiguriert ist.

## Revendications

1. Frontal numérique, DFE (100), pour un modulateur numérique direct de radiofréquence (DDRM), le DFE comprenant :

une unité de sur-échantillonnage (101), configurée pour fournir un signal de bande de base numérique, DBB, à 4 phases sur-échantillonné (107) comprenant des informations en phase (I) et en quadrature (Q) (105) ; et
une unité de conversion (103), configurée pour convertir le signal DBB à 4 phases sur-échantillonné (107) en un signal DBB à 8 phases (109), **caractérisé en ce que**
l'unité de sur-échantillonnage (101, 811, 812) comprend au moins l'un d'un suréchantillonneur entier (811) ayant un rapport de sur-échantillonnage entier et d'un suréchantillonneur fractionnaire (812) ayant un rapport de sur-échantillonnage non entier,
l'unité de conversion (103, 1301) étant configurée pour supprimer un signal d'image indésirable causé par une erreur de phase du DFE (1310), en particulier en raison de la conversion de phase de l'unité de conversion (1301),
l'unité de conversion (103, 1301) comprenant un élément de retard (1401) configuré pour retarder les informations de quadrature (Q) du signal DBB à 4 phases sur-échantillonné (107, 801, 802) ;
l'unité de conversion (103, 1301) étant configurée pour fournir des versions retardées (A", B") d'informations en phase et en quadrature du signal DBB à 8 phases (109) sur la base des informations en quadrature retardées (Q) du signal DBB à 4 phases (107, 801, 802), et
l'unité de conversion (1301) comprenant un multiplexeur (1404, 1405) configuré pour multiplexer entre la commutation des informations en phase et en quadrature (A', B') du signal DBB à 8 phases (109) et leurs versions retardées (A", B") vers les informations en phase et en quadrature (A, B) du signal DBB à 8 phases (109, 1302).

2. DFE (100, 810) selon la revendication 1,
l'unité de conversion (103) comprenant une logique de combinaison numérique (600, 700, 1400) configurée pour fournir le signal DBB à 8 phases (109, 803, 1302) sur la base de combinaisons des informations en phase (I) et en quadrature (Q) (105).

3. DFE (100, 810) selon la revendication 2,
la logique de combinaison numérique (600, 700, 1400) étant configurée pour fournir les combinaisons des informations en phase (I) et en quadrature (Q) sur la base d'une addition (601), d'une soustraction (602) et d'une multiplication (603, 604) des informations respectives en phase (I) et en quadrature (Q) (105).

4. DFE (100, 810) selon la revendication 2 ou 3,
la logique de combinaison numérique (600, 700, 1400) étant configurée pour générer les combinaisons suivantes : $A = I$; $B = \sqrt{0,5}(I + Q)$ ; $C = Q$; $D = \sqrt{0,5}(I - Q)$ ou toute mise à l'échelle linéaire de ces combinaisons, I et Q étant les informations en phase et en quadrature du signal DBB à 4 phases sur-échantillonné (107, 801, 802).

5. DFE (100, 810) selon la revendication 2 ou 3,
la logique de combinaison numérique (600, 700, 1400) étant configurée pour générer les combinaisons suivantes : $A = I-(\sqrt{2}-1)Q$ ; $B = I+(\sqrt{2}-1)Q$ ; $C = Q+(\sqrt{2}-1)I$ ; $D = Q-(\sqrt{2}-1)I$ ou toute mise à l'échelle linéaire de ces combinaisons, I et Q étant les informations en phase et en quadrature du signal DBB à 4 phases sur-échantillonné (107, 801, 802).

6. DFE (100, 810) selon l'une des revendications 1 à 5, comprenant :
au moins une deuxième unité de sur-échantillonnage (813), ayant notamment un rapport de sur-échantillonnage entier, configurée pour sur-échantillonner le signal DBB à 8-phases (109, 803) afin de générer un signal DBB à 8-phases sur-échantillonné (804).

7. DFE (100, 910) selon l'une des revendications précédentes, comprenant :
une unité d'annulation d'image (901) configurée pour annuler un signal d'image indésirable causé par une erreur de phase du DFE (910), notamment due à la conversion de phase de l'unité de conversion (814).

8. DFE (100, 910) selon la revendication 7,
l'unité d'annulation d'image (901) comprenant deux filtres numériques FIR (1000a, 1000b) avec des réponses de fréquence de phase différentes.

9. DFE (100, 910) selon la revendication 8,
un premier (1000a) des deux filtres FIR (1000a, 1000b) comprenant l'ensemble de coefficients [c, 1, -c] et un second (1000b) des deux filtres FIR (1000a, 1000b) comprenant l'ensemble de coefficients [-c, 1, 0], c étant une constante qui a une valeur absolue inférieure à un, en particulier inférieure à 0,1, en particulier inférieure à 0,01.

10. DFE (100) selon l'une des revendications précédentes,
l'unité de sur-échantillonnage (101) comprenant un premier étage de sur-échantillonnage (111) et un deuxième étage de sur-échantillonnage (113).

11. DFE (100) selon l'une des revendications précédentes, comprenant :
un troisième étage de sur-échantillonnage (115) configuré pour sur-échantillonner le signal DBB à 8 phases (109).

100

101 107 103

105 109

I

Q

Fig. 1a

Fig. 1b

Fig. 1c

200a

Fig. 2a

Fig. 2b

Fig. 3

Fig. 4

Fig. 5

Fig. 6

Fig. 7

Fig. 8

Fig. 9

Fig. 10

Fig. 11

Fig. 12

Fig. 13

Fig. 14

1500

providing an up-sampled 4-
phase digital baseband (DBB)
signal comprising in-phase
and quadrature information

1501

converting the up-sampled 4-
phase DBB signal to an 8-
phase DBB signal

1502

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2010056201 A1, AKAMINE YUKINORI

**Non-patent literature cited in the description**

• **VANKKA J et al.** A GSM/EDGE/WCDMA MODULATOR WITH ON-CHIP D/A CONVERTER FOR BASE STATIONS. *IEEE TRANSACTIONS ON CIRCUITS AND,* 10 October 2002, vol. 49 (10), 645-655

• **MAHARATNA KETAL.** Virtually scaling-free adaptive CORDIC rotator. *IEE PROCEEDINGS E. COMPUTERS & DIGITAL TECHNIQUES, INSTITUTION OF ELECTRICAL ENGINEERS,* 18 November 2004, vol. 151 (6), 448-456